# EUROPEAN PATENT SPECIFICATION

(11) **EP 4 111 086 B1**
(45) Date of publication and mention of the grant of the patent: **23.04.2025**
(21) Application number: 21760628.4
(22) Date of filing: 24.02.2021
(51) Int. Cl.: F16M 11/00, F16M 13/00, A47B 37/00, F16M 11/04, F16M 11/08, F16M 13/02

(54) **DEVICE FOR ROTATING A MONITOR AROUND AN INSTRUMENT**
VORRICHTUNG ZUM DREHEN EINES MONITORS UM EIN INSTRUMENT
DISPOSITIF POUR FAIRE TOURNER UN MONITEUR AUTOUR D'UN INSTRUMENT

(30) Priority: 25.02.2020 IL 27290220
(43) Date of publication of application: 04.01.2023
(73) Proprietor: Visionix Ltd., 9695809 Jerusalem (IL)
(72) Inventor: WAGSCHAL, Eyal, 9094200 Elazar (IL)
(74) Representative: Boult Wade Tennant LLP
(86) International application number: PCT/IB2021/051546
(87) International publication number: WO 2021/171198

(56) References cited:
- CA-A- 1 195 670
- US-A1- 2005 022 699
- US-A1- 2005 156 091
- US-A1- 2007 295 870
- US-B1- 6 736 360

## Description

### FIELD

The present invention relates to the field of desktop instrumentation with a monitor attached such that it can be viewed from more than one side of the instrument.

### BACKGROUND

There exist instruments having a monitor screen, in which it would be useful to provide visual access to the information displayed on the monitor from more than one direction. In particular, it would be useful while making adjustments to the instrument or on a subject for whom the instrument is operating, to be able to see the information on the monitor from more than one side of the instrument. This is particularly advantageous for performing ophthalmic or optometric measurements on a subject, where, for instance, the practitioner may like to sit by the side of the patient to check if he/she is sitting correctly at the machine with the chin and forehead in the correct position, whilst viewing information on the monitor. Depending on the geometry of the room, sometimes one side would be preferable and sometimes the opposite side. Alternatively, the practitioner may prefer to sit opposite the patient, in front of the machine. Prior art instruments having multiple monitors, such as one on each side, are known, such that the viewing screen may be viewed from several sides. An obvious drawback of such instruments is the cost of several monitors. Another potential solution is to rotate or swivel a single monitor around the corners of the instrument in order that it be viewable from multiple directions. The disadvantage of this option is that, to easily clear the corners of the instrument, the monitor needs to be attached to an arm of length that would leave the monitor positioned at a distance from the sides of the instrument. The distance between the monitor and the equipment may predispose the monitor to accidental impact, resulting in damage to the monitor, the person, or the instrument.

There therefore exists a need for a solution which overcomes at least some of the disadvantages of prior art systems and methods.

The disclosures of any publications mentioned in this specification, or in continuation or derivative applications thereof, are hereby incorporated by reference, each in its entirety. Document CA 1 195 670 A discloses a similar mechanism for rotating a monitor.

### SUMMARY

The present disclosure provides new exemplary systems for an instrument having a single monitor screen, switchably positionable at multiple side faces of the instrument, without protruding from the instrument significantly more than the thickness of the monitor. The system utilizes a rotation mechanism that enables a monitor to be rotated between at least some of the side faces of the instrument, to negotiate the corners of the instrument, and to be parked at stable positions with respect to the side faces of the geometrically shaped instrument to which the monitor is attached. This is achieved by causing the monitor to follow the outer profile of a specially shaped cam fixedly mounted on the instrument in a plane generally parallel to a plane of rotation desired of the monitor, and generally perpendicular to the planes of the faces of the instrument, if the instrument is of the usual rectangular shape. The profile is shaped, having protruding sections and depressions or hollows, such that the protruding sections cause the monitor to move further away from the instrument as it passes the corners of the instrument, and the depressions or hollows in the cam profile, enable the monitor to move closer to the instrument as it reaches the faces of the instrument. The monitor is attached to an arm assembly, having a pivot bearing, enabling the arm assembly to rotate around the instrument. The arm assembly is made up of two parts - a longitudinally inner part in which the pivot bearing is mounted, and an outer part which slides longitudinally relative to the inner part, and to which the monitor is mounted. A spring mechanism attached between the inner and outer parts of the arm assembly, exerts an inwardly directed tensional force on the outer part of the arm assembly, attempting to pull it inwards towards the pivot joint. The inward motion of the outer part of the arm assembly is controlled by a cam follower, which can conveniently be a pin attached to the outer part of the arm assembly, and which follows the profile of the cam. In order to reduce friction, the pin can have a bearing fitted to it, such as a roller or needle or sleeve bearing, and all references in this disclosure to the term pin in relation to the cam follower, are intended to include such alternatives, and not to be limited only to a pin. The inwardly directed force ensures that the pin remains in contact with the cam profile and follows it as the arm assembly is rotated. As the arm assembly is rotated, the pin in the arm assembly follows the outer profile of the cam, and moves the monitor outwards to round the corners of the instrument. As the monitor passes positions parallel to the faces of the instrument, the monitor is pulled back inwards towards the instrument face.

The cam profile is shaped such that, when the cam follower reaches a new equilibrium point on the cam at one of the cam profile depressions, i.e., a position of minimum potential energy of the spring mechanism, the monitor concomitantly comes to rest at a position parallel and close to another side of the instrument. In this manner, the monitor may be easily positioned on two or three sides of the instrument in resting positions that bring the monitor close to the instrument.

It is to be understood that although the systems described in this disclosure are most usually used for enabling a monitor to negotiate around a corner of an instrument, and this is the situation in which the systems are generally described in this disclosure, such mechanisms can also be used to ensure that the monitor does not hit any projection extending beyond the surface of the instrument at locations other than the corner, and the systems are intended to cover all such projecting features, whether corners or other obstacles. The systems are also thuswise claimed, to include avoidance of all such obstructions.

One exemplary implementation involves a mechanism for rotating a monitor around an instrument, the mechanism comprising:
(i) a cam fixedly mounted on the instrument in a plane generally parallel to the plane of rotation of the monitor, the outer profile of the cam having at least one lobe directed towards projecting feature of the instrument,
(ii) an extendible arm assembly comprising an outer section attached to the monitor, and an inner section attached to the instrument by means of a rotary bearing, the outer section of the extendible assembly arm being slidingly attached to the inner section of the extendible assembly arm, and having a spring mechanism, adapted to apply a tensional force to the outer section in the direction towards the rotary bearing, and
(iii) a cam follower attached to the outer section of the extendible arm assembly, such that as the extendible arm assembly is rotated, the cam follower traces the outer profile of the cam, thereby causing the outer section of the extendible arm also to trace the outer profile of the cam.

In such a mechanism, the projecting feature may be a corner of the instrument.

Furthermore, the cam follower may be a pin or a bearing, adapted to slide or roll along the outer profile of the cam. In either of the above cases, the outer profile of the cam may further comprise at least one depression positioned closer to the rotary bearing than the regions on either side of the depression, the depression being positioned such that when the extendible arm assembly is at an angle that passes through the depression, the monitor is positioned along a side of the instrument, and in close proximity to the side of the instrument. In this disclosure, the term depression may be understood as a gradual indentation of the outer profile of the cam relative to the surrounding parts of the profile either side of the indentation.

In any of the above mentioned mechanisms, the distance of the outer edge of the cam lobe from the rotary bearing may be such that when the extendible arm assembly is at an angle that passes through the projecting feature of the instrument, the monitor is positioned beyond the corner of the instrument.

Furthermore, the lobe may be such that a line between the rotary bearing and the furthest point from the rotary bearing to the outer edge of the cam lobe, passes through or close to the projecting feature of the instrument.

The extendible arm assembly may comprise two plates connected such that one slides along the other, or it may comprise two cylindrical elements connected such that one slides within the other.

### BRIEF DESCRIPTION OF THE DRAWINGS

Embodiments of the present disclosure will be understood and appreciated more fully from the following detailed description, taken in conjunction with the drawings in which:
Figs.1A-B show prior art solutions for viewing the monitor of an instrument from different angles;
Fig. 2 illustrates an isometric view of an exemplary implementation of the monitor arrangement as described in the current disclosure;
Figs. 3A-B depict the elements of an exemplary implementation of the monitor positioner in plan-view (Fig. 3A) and from the side elevation (Fig. 3B); and
Figs. 4A-B illustrate two positions of a monitor and its attaching arm, as the monitor moves around the corner of an instrument by means of a cam mechanism.

### DETAILED DESCRIPTION

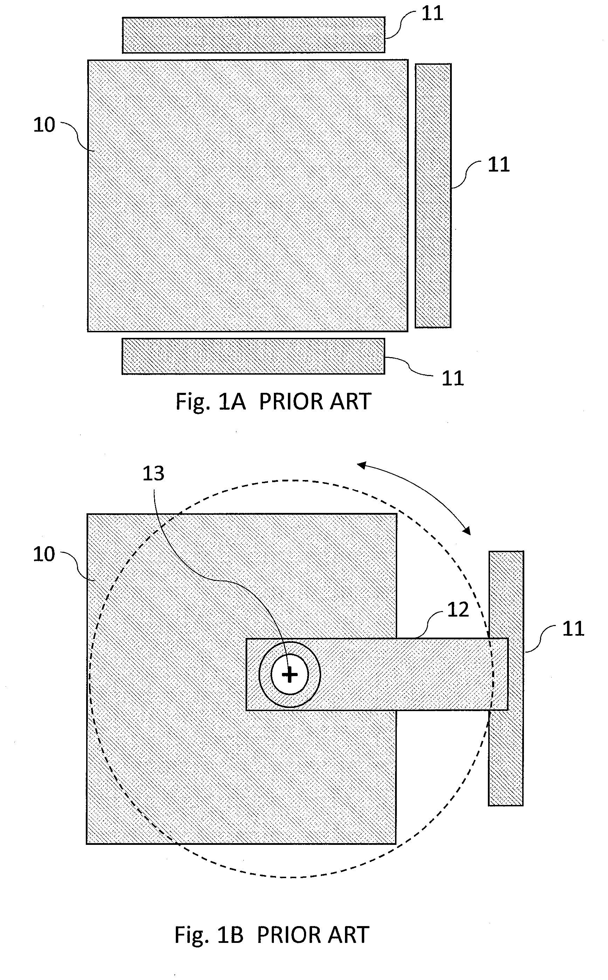

Reference is now made to Fig. 1A, showing a top view of a prior art configuration of an instrument 10 having monitors 11 attached to several of its faces, such that it can be viewed from those several faces. Having several monitors, each attached to one side of the instrument, provides the necessary ability to view the output of the instrument from multiple angles. This solution has the obvious disadvantages of cost. Fig. 1B illustrates another prior art solution, in which a monitor 11 is rotated around an instrument 10 by means of a connecting arm 12 extending between the monitor and the instrument, and which rotates around a single fixed point 13 positioned near the center of the instrument, equidistant from opposite sides of the instrument. In this orientation, the monitor 11 must be situated at a sufficient distance from the instrument in order to pass the corners of the instrument during rotation, as illustrated by the dashed circle. Such a configuration would result in the monitor requiring significant more space than a single monitor attached directly to the front of the instrument. Having the monitor hanging at a distance from the instrument face also carries additional risk of damage to the monitor or to a person navigating around the instrument. Both the use of precious office space and the potential for damage are disadvantages of this solution.

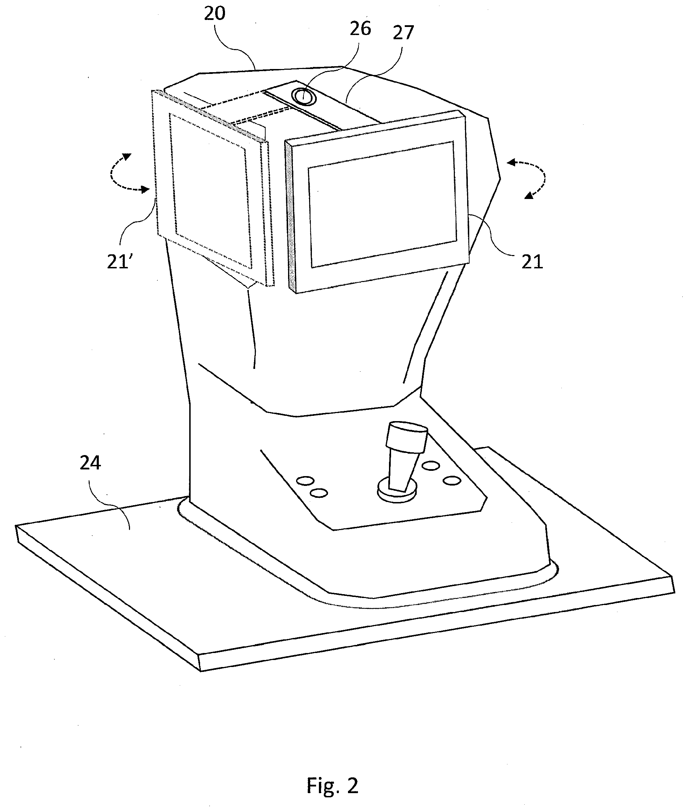

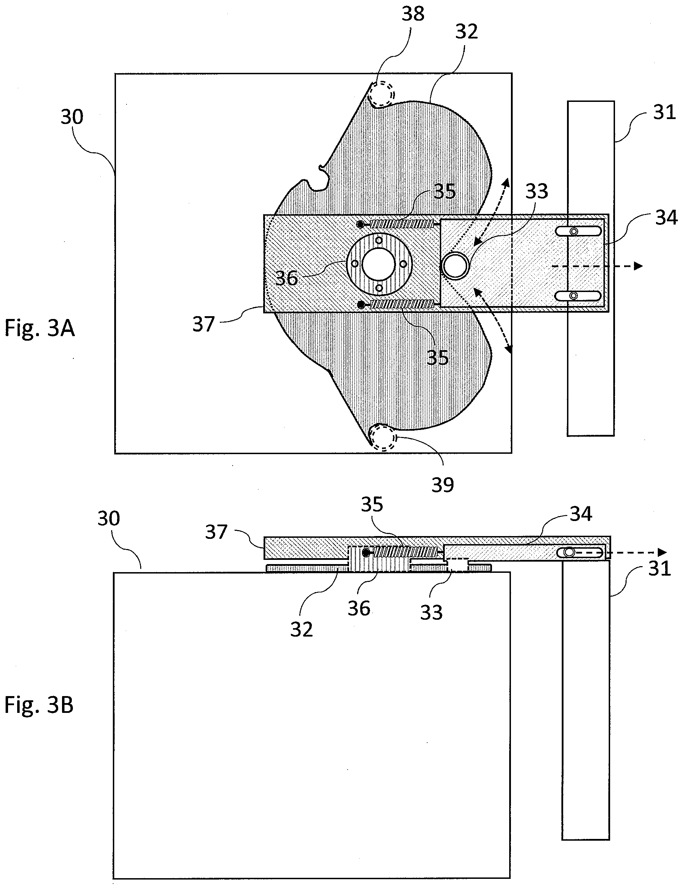

Reference is now made to Fig. 2, illustrating an isometric schematic overall view of an exemplary implementation of the present disclosure, having a single monitor 21 positioned on the surface of one side of the instrument 20, the monitor being attached to the instrument by a connecting bar or arm 27. The instrument 20 may be positioned in a fixed position on a stable surface such as the floor, a table, or a desktop 24. The arm 27 is fastened in this exemplary implementation, at one end to the top of the instrument by means of a pivot bearing 26, such that it is free to rotate. The other end of the arm 27 is attached to the monitor 21. As will be illustrated in connection with Figs. 3A and 3B, using the novel features of the present disclosure, the monitor 21 is able to be rotated to position 21', where it will be flush on another face of the instrument, yet without having collided with the corner of the instrument as it is rotated.

Reference is now made to Figs. 3A and 3B, which show a mechanism of an exemplary implementation of the instrument of Fig. 2, enabling the monitor 31 to swivel around the instrument in a manner which enables the monitor to clear the corner of the instrument, and yet keeps the monitor flush with the face when the rotation of the monitor positions the monitor opposite a face. The system enables rotation of the monitor to either or both sides of the original position. The rotation mechanism may allow the arm to rotate over 360 degrees, allowing the monitor to be viewed from any side of the instrument.

Reference is first made to Fig. 3A, illustrating how the monitor 31 can be swiveled around a rotary bearing 36 by an extendible arm 37. The system also comprises a cam form 32 mounted on the instrument, whose profile is followed by a cam follower 33. The cam 32 may be fixedly attached to the top or the bottom of the instrument 30. In the examples illustrated in this disclosure, the monitor rotating mechanism is shown mounted on the top of the instrument, though it is to be understood that this is only one option, and that it could also be mounted on the bottom, or even on both top and bottom. The monitor is attached by means of the extendible arm 37 to the rotary bearing 36 mounted on the top of the instrument, such that the monitor can swing around the instrument on the end of the arm 37. The arm 37 is extendible such that as the monitor approaches the protruding corner of the instrument, the arm can be extended such that the monitor does not hit the corner of the instrument. The outer extendible part of the arm 34, is attached to the inner part of the arm by means of spring elements 35, which generate a tensional force between the two parts of the arm, such that the spring elements tend to shorten the length of arm, if not prevented from doing so by an external element. The cam follower 33 attached to the outer extendible part 34 of the arm 37, is such an element, and as the arm and monitor are rotated, the cam follower 33 runs along the surface profile of the cam 32, which is mounted fixedly on the instrument. The cam profile is shaped such that when the monitor is located at the front side of the instrument, the cam follower is in a depression of the cam profile, which is the closest point of the cam profile in that sector of the cam, to the bearing 36, the distance from the cam follower 33 to the bearing 36, in conjunction with the lengths of the two parts of the arm, being such that the monitor 31 sits essentially on or close to the face of the instrument. This is a position of minimal potential energy of the spring system, which operates to pull the monitor towards the bearing. Moving on either side away from the cam depression, the cam profile has a lobe extending out towards the corner of the instrument, the distance from the bearing axis to the furthermost point of the lobe being such that the cam follower 33 pushes the outer section of the extendable arm as it reaches the corner, sufficiently that the monitor just traverses the corner. The cam profile 32 is shaped such that after the monitor has traversed the corner, the cam follower 33 is again allowed to move closer to the bearing until it reaches a second depression 38 in the cam profile which is positioned at a distance from the bearing axis such that the monitor sits on or close to the side face of the instrument. For symmetrically shaped instruments, the cam generally has bilateral symmetry such that a similar profile is found on the opposite side of the instrument with the second depression 39 causing the monitor to sit on the opposite face. If the instrument is not rectilinear, the aligned positions of depression 38, 39, may be located at other than 90° from the front depression 33. In Fig. 3A, three potential positions of the cam follower are shown. In addition to the position in which cam follower 33 is positioned, movement to either the right or left will result in the cam follower following an outwardly arced trajectory so that the monitor avoids the corners of the instrument, and coming to rest in either of two positions represented by dotted circles 38 or 39. It is to be understood that the present illustration is one exemplary embodiment of the disclosure. In some implementations, alternate shape configurations of the cam 32 may be used, such that the monitor has further stable positions and viewing angles.

Reference is now made to Fig. 3B, showing a side view of the implementation of Fig. 3A. This view illustrates how the various components are connected and attached. The rotary bearing 36 is fixably attached to the instrument 30, and the extendable arm 37 rotates around the bearing. In this embodiment the outer extendable part 34 of the extendable arm 37 is shown, the outer part 34 sliding along a slot along the length of the inner part of the extendible arm which is radially static relative to the rotary bearing. This arrangement for providing the radial or longitudinal sliding motion is only one suggested implementation, and any other suitable arrangement is also feasible, such as a pair of tubes, one sliding inside the other (not shown in the drawings). The springs 35 should be selected such that they have sufficient tension to hold the monitor securely in place, but are able to be extended in order to move the monitor outwards away from the rotary bearing, without undue effort. The pins that attach the outer extendible part 34 to the inner part of the arm 37 allow longitudinal movement or sliding of the outer extendable part 34 and the monitor relative to the inner arm 37, as shown by the dotted arrow, as the cam follower 33 moves laterally around the cam 32, moving the monitor with it.

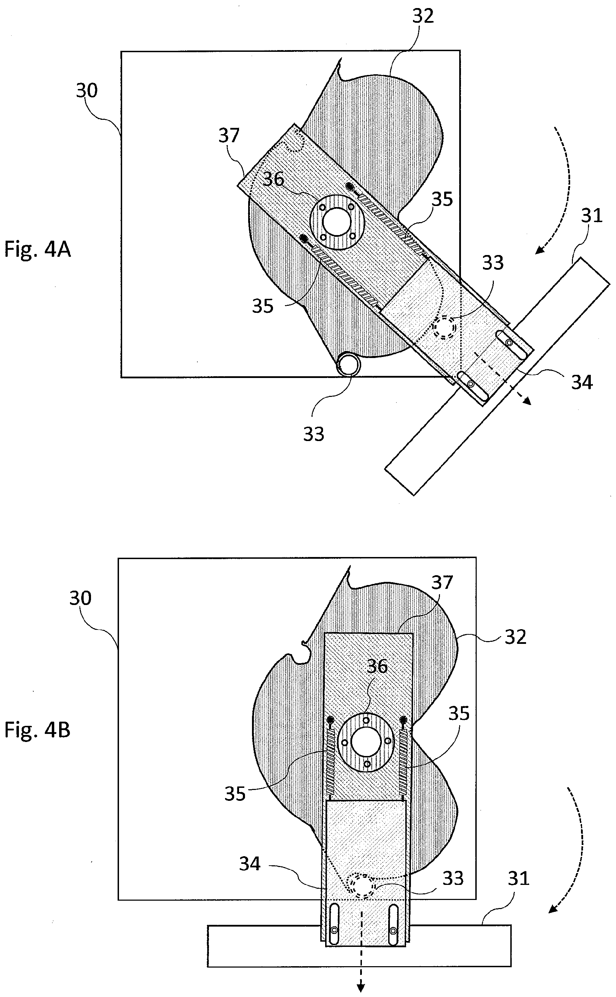

Reference is now made to Figs. 4A and 4B, illustrating the cam mechanism in operation as the monitor 31 is rotated around the pivot bearing 36 on the top of the instrument 30. The outer section 34 of the arm holding the monitor 31 is attached to the inner section of the arm 37 by means of a set of springs 35 or other tensioning mechanism. As the arm rotates away from its position with the monitor closest to the instrument, the cam follower 33 rides the cam profile 32 pushing the outer section of the arm 34 and hence also the monitor 31 further from the pivot 36, stretching the springs 35 as the monitor rotates in order to keep the cam follower in contact with the cam profile. The trajectory of the monitor's movement is controlled by the shape of the cam 32, and by the movement of the cam follower 33 along the edge of the cam. Because the cam follower 33 is fixedly attached to the outer extendible part 34, the motion of the outer extendible part 34, and thus of the monitor 31, is constrained by the path of the cam follower 33 along the profile of the cam 32. The motion of the arm 37 is limited to rotation around the rotary bearing 36. The longitudinal motion of the monitor away from the instrument is enabled because of stretching of the springs 35, that allows the outer arm section 34 to slide relative to the arm 37. As is seen in Fig. 4B, when the cam follower reaches the indentation on the cam, the monitor 31 is arranged to come to rest parallel to an adjacent side of the instrument 30 from its original position. Rotation of the monitor in the opposite direction will result in the monitor being positioned on the opposite face of the instrument to the position in 4B. Depending on the desired positions of the monitor, in other embodiments the cam may be fashioned in any number of useful shapes that fit the shape of the instrument and accomplish the desired movement of the monitor or other attached element.

Whereas embodiments of the present disclosure have focused on the movable attachment of a vertical monitor to a desktop instrument, it is understood that embodiments of the disclosed cam follower and cam mechanism could be applied to any number of other situations. The same mechanism could be applied to any piece of equipment or tool requiring that one component be held in several rotatable positions relative to the main body.

## Claims

1. A mechanism for rotating a monitor around an instrument (10), the mechanism comprising:
an extendible arm (37) assembly comprising an outer section (34) attached to the monitor (11),
and an inner section attached to the instrument by means of a rotary bearing (36),
**characterized in that** the mechanism comprises:
a cam (32) fixedly mounted on the instrument in a plane generally parallel to the plane of rotation of the monitor, the outer profile of the cam having at least one lobe directed towards a projecting feature of the instrument, the outer section of the extendible assembly arm being slidingly attached to the inner section of the extendible assembly arm, and having a spring mechanism adapted to apply a tensional force to the outer section in the direction towards the rotary bearing; and
a cam follower (33) attached to the outer section of the extendible arm assembly, such that as the extendible arm assembly is rotated, the cam follower traces the outer profile of the cam, thereby causing the outer section of the extendible arm also to trace the outer profile of the cam.

2. The mechanism according to claim 1 wherein the cam follower is a pin, adapted to slide along the outer profile of the cam.

3. The mechanism according to claim 1 wherein the cam follower is a bearing, adapted to roll along the outer profile of the cam.

4. The mechanism according to any of claims 1 to 3, wherein the outer profile of the cam further comprises at least one depression positioned closer to the rotary bearing than the regions on either side of the depression, the depression being positioned such that when the extendible arm assembly is at an angle that passes through the depression, the monitor is positioned along a side of the instrument, and in close proximity to the side of the instrument.

5. The mechanism according to any of the previous claims, wherein the distance of the outer edge of the cam lobe from the rotary bearing is such that when the extendible arm assembly is at an angle that passes through the projecting feature of the instrument, the monitor is positioned beyond the projecting feature of the instrument.

6. The mechanism according to any of the previous claims, wherein the lobe is such that a line between the rotary bearing and the furthest point from the rotary bearing to the outer edge of the cam lobe, passes through or close to the projecting feature of the instrument.

7. The mechanism according to any of the previous claims, wherein the extendible arm assembly comprises two plates connected such that one slides along the other.

8. The mechanism according to any of claims 1 to 6, wherein the extendible arm assembly comprises two cylindrical elements connected such that one slides within the other.

9. The mechanism according to any of the previous claims, wherein the projecting feature of the instrument is a corner of the instrument.

## Patentansprüche

1. Mechanismus zum Drehen eines Monitors um ein Instrument (10), der Mechanismus umfassend:
eine Anordnung mit ausfahrbarem Arm (37), die einen Außenabschnitt (34), der an dem Monitor (11) befestigt ist, und einen Innenabschnitt, der an dem Instrument mithilfe eines Drehlagers (36) befestigt ist, umfasst,
**dadurch gekennzeichnet, dass** der Mechanismus umfasst:
eine Nocke (32), die fest an dem Instrument in einer Ebene montiert ist, die im Allgemeinen parallel zu der Rotationsebene des Monitors ist, wobei das Außenprofil der Nocke mindestens einen Lappen aufweist, der auf ein vorspringendes Merkmal des Instruments gerichtet ist, wobei der Außenabschnitt des ausfahrbaren Anordnungsarms gleitend an dem Innenabschnitt des ausfahrbaren Anordnungsarms befestigt ist und einen Federmechanismus aufweist, der ausgestaltet ist, eine Zugkraft auf den Außenabschnitt in Richtung des Drehlagers auszuüben; und
einen Nockenstößel (33), der an dem Außenabschnitt der Anordnung mit ausfahrbarem Arm befestigt ist, so dass, wenn die Anordnung mit ausfahrbarem Arm gedreht wird, der Nockenstößel das Außenprofil der Nocke nachzeichnet, wodurch verursacht wird, dass der Außenabschnitt des ausfahrbaren Arms auch das Außenprofil der Nocke nachzeichnet.

2. Mechanismus nach Anspruch 1, wobei der Nockenstößel ein Stift ist, der ausgestaltet ist, entlang des Außenprofils der Nocke zu gleiten.

3. Mechanismus nach Anspruch 1, wobei der Nockenstößel ein Lager ist, das ausgestaltet ist, entlang des Außenprofils der Nocke zu rollen.

4. Mechanismus nach einem der Ansprüche 1 bis 3, wobei das Außenprofil der Nocke ferner mindestens eine Vertiefung umfasst, die näher am Drehlager als die Bereiche auf jeder Seite der Vertiefung positioniert ist, wobei die Vertiefung so positioniert ist, dass, wenn die Anordnung mit ausfahrbarem Arm in einem Winkel ist, der durch die Vertiefung verläuft, der Monitor entlang einer Seite des Instruments und in unmittelbarer Nähe zur Seite des Instruments positioniert ist.

5. Mechanismus nach einem der vorhergehenden Ansprüche, wobei der Abstand der Außenkante des Nockenlappens zum Drehlager so ist, dass, wenn die Anordnung mit ausfahrbarem Arm in einem Winkel ist, der durch das vorspringende Merkmal des Instruments verläuft, der Monitor jenseits des vorspringenden Merkmals des Instruments positioniert ist.

6. Mechanismus nach einem der vorhergehenden Ansprüche, wobei der Lappen so ist, dass eine Linie zwischen dem Drehlager und dem am weitesten entfernten Punkt vom Drehlager zur Außenkante des Nockenlappens durch oder in der Nähe des vorspringenden Merkmals des Instruments verläuft.

7. Mechanismus nach einem der vorhergehenden Ansprüche, wobei die Anordnung mit ausfahrbarem Arm zwei Platten umfasst, die so verbunden sind, dass eine entlang der anderen gleitet.

8. Mechanismus nach einem der Ansprüche 1 bis 6, wobei die Anordnung mit ausfahrbarem Arm zwei zylindrische Elemente umfasst, die so verbunden sind, dass eines innerhalb des anderen gleitet.

9. Mechanismus nach einem der vorhergehenden Ansprüche, wobei das vorspringende Merkmal des Instruments eine Ecke des Instruments ist.

## Revendications

1. Mécanisme pour faire tourner un moniteur autour d'un instrument (10), le mécanisme comprenant :
un ensemble de bras extensible (37) comprenant une section extérieure (34) fixée au moniteur (11), et une section intérieure fixée à l'instrument au moyen d'un palier rotatif (36),
**caractérisé en ce que** le mécanisme comprend :
une came (32) montée de manière fixe sur l'instrument dans un plan généralement parallèle au plan de rotation du moniteur, le profil extérieur de la came présentant au moins un lobe dirigé vers une caractéristique faisant saillie de l'instrument, la section extérieure du bras d'assemblage extensible étant fixée de manière coulissante à la section intérieure du bras d'assemblage extensible, et présentant un mécanisme à ressort adapté pour appliquer une force de tension à la section extérieure dans la direction vers le palier rotatif ; et
un suiveur de came (33) fixé à la section extérieure de l'ensemble de bras extensible, de telle sorte que lorsque l'ensemble de bras extensible est mis en rotation, le suiveur de came suit le profil extérieur de la came, en amenant ainsi la section extérieure du bras extensible à suivre également le profil extérieur de la came.

2. Mécanisme selon la revendication 1, dans lequel le suiveur de came est une broche, adaptée pour coulisser le long du profil extérieur de la came.

3. Mécanisme selon la revendication 1, dans lequel le suiveur de came est un palier, adapté pour rouler le long du profil extérieur de la came.

4. Mécanisme selon l'une quelconque des revendications 1 à 3, dans lequel le profil extérieur de la came comprend en outre au moins une dépression positionnée plus près du palier rotatif que les régions de chaque côté de la dépression, la dépression étant positionnée de sorte que lorsque l'ensemble de bras extensible est à un angle qui passe à travers la dépression, le moniteur est positionné le long d'un côté de l'instrument, et à proximité immédiate du côté de l'instrument.

5. Mécanisme selon l'une quelconque des revendications précédentes, dans lequel la distance entre le bord extérieur du lobe de came et le palier rotatif est telle que lorsque l'ensemble de bras extensible forme un angle qui passe à travers la caractéristique faisant saillie de l'instrument, le moniteur est positionné au-delà de la caractéristique faisant saillie de l'instrument.

6. Mécanisme selon l'une quelconque des revendications précédentes, dans lequel le lobe est tel qu'une ligne entre le palier rotatif et le point le plus éloigné du palier rotatif jusqu'au bord extérieur du lobe de came, passe à travers ou à proximité de la caractéristique faisant saillie de l'instrument.

7. Mécanisme selon l'une quelconque des revendications précédentes, dans lequel l'ensemble de bras extensible comprend deux plaques reliées de telle sorte que l'une coulisse le long de l'autre.

8. Mécanisme selon l'une quelconque des revendications 1 à 6, dans lequel l'ensemble de bras extensible comprend deux éléments cylindriques reliés de telle sorte que l'un coulisse dans l'autre.

9. Mécanisme selon l'une quelconque des revendications précédentes, dans lequel la caractéristique faisant saillie de l'instrument est un angle de l'instrument.
